# FASCICULE DE BREVET EUROPEEN

(11) **EP 0 686 450 B1**
(45) Date de publication et mention de la délivrance du brevet: **01.12.1999**
(21) Numéro de dépôt: 95401024.5
(22) Date de dépôt: 03.05.1995
(51) Int. Cl.: B23D 23/00

(54) **Outil de coupe d'un profilé notamment une gouttière**
Schneidvorrichtung für profilierte Materialien, insbesonder für Rinnen
Cutting apparatus for profiled material e.g. gutters

(30) Priorité: 03.05.1994 FR 9405399
(43) Date de publication de la demande: 13.12.1995
(73) Titulaire: DAL'ALU S.A., 33650 Saint Medard d'Eyrans (FR)
(72) Inventeur: Micouleau, Jean Pierre, F-33640 Portes (FR)
(74) Mandataire: Sabatier, Marc (FR)

(56) Documents cités:
- CH-A- 141 369
- DE-A- 1 752 917
- DE-C- 234 946

## Description

La présente invention concerne un outil de coupe d'un profilé à section ouverte, notamment une gouttière en tôle.

Il pourra s'agir de gouttière dite "corniche" ou bien encore de gouttière demi-ronde.

Il est connu d'obtenir ces produits par l'intermédiaire de profileuses, qui à partir d'un rouleau de feuillard d'acier ou d'aluminium galvanisé, ou pré-laqué permettent par action de galets successifs, de conformer la tôle selon des paramètres pré-définis en vue d'obtenir la gouttière souhaitée.

Il est également connu de disposer en sortie de profileuse, un outil de coupe, coupant directement la gouttière selon la longueur souhaitée. Cette opération peut s'effectuer en atelier, ou également sur une station mobile de profilage opérant essentiellement sur les chantiers.

Ces outils de coupe peuvent être de tous types, et sont, par exemple, constitués par une tronçonneuse montée sur bâti, ou bien encore, par une lame coupante actionnée par un levier à partir d'un point d'articulation.

On comprend bien que ce dernier type d'outil présente l'inconvénient majeur de déformer un profilé ouvert, si on ne prend pas quelques précautions.

C'est ainsi qu'il est également connu un outil de coupe comportant deux flasques plans parallèles, définissant entre eux un espace sensiblement correspondant à l'épaisseur d'une lame coupante et dans lesquels sont ménagées deux lumières symétriques de profils sensiblement identiques à celui de la gouttière pour constituer à celle-ci un berceau de guidage en vue de sa coupe par actionnement par tout moyen de la lame coupante entre lesdits flasques.

Si de tels moyens ont permis d'améliorer la qualité de coupe, il n'en reste pas moins vrai que celle-ci est loin encore d'être parfaite, car si la gouttière est guidée dans les lumières correspondantes des flasques, elle n'y est pas pour autant réellement maintenue au cours de l'opération de coupe.

Ceci est dû au fait que les lumières doivent être de dimensions supérieures à celles de la gouttière pour permettre à celle-ci une introduction et un coulissement aisé.

Non seulement les frottements subséquents à ce coulissement ont pour effet néfaste de rayer la tôle surtout lorsqu'elle est laquée, mais de plus, le jeu existant entre le profil de la gouttière et les lumières des flasques ne permet pas de la maintenir fermement pendant la coupe.

Cela a pour conséquence de provoquer des craquelures superficielles notamment dans le cas des produits laqués.

Un autre inconvénient réside dans le fait que les lames coupantes, dans ce type d'outil précité, attaquent le profilé à couper par deux points car la lame descend de manière globalement verticale. Ceci a pour effet néfaste de créer un copeau se formant par ses deux extrémités et se terminant lors de leur rencontre, approximativement au milieu du profilé, ce qui dans la plupart des cas conduit à une bavure inesthétique et pouvant blesser un utilisateur.

Un autre inconvénient vient du fait que lors de la coupe de la gouttière à une certaine longueur, celle-ci se trouve en porte-à-faux à la sortie de la profileuse et de l'outil de coupe ce qui provoque son flambage et même son vrillage sur elle-même. Ce défaut d'alignement avec la partie du profilé restant dans la machine, aura pour effet néfaste de marquer le profilé au niveau du dernier galet de profilage, ce qui rend le produit fini inesthétique également.

L'outil de coupe selon l'invention permet de remédier à tous ces inconvénients en s'adaptant préférentiellement, mais non obligatoirement, à la sortie de la profileuse.

L'invention concerne à cet effet un outil de coupe d'un profilé à section ouverte, notament une gouttière en tôle, du type comportant deux flasques plans parallèles, définissant entre eux un espace sensiblement correspondant à l'épaisseur d'une lame coupante et dans lesquels sont ménagées deux lumières symétriques de profils sensiblement identiques à celui de la gouttière pour constituer à celle-ci un berceau de guidage en vue de sa coupe par actionnement par tout moyen de la lame coupante entre lesdits flasques, caractérisé en ce que le berceau de guidage défini par les lumières est délimité dans sa zone supérieure par le contour convexe d'une partie fixe des flasques et dans sa zone inférieure par le contour concave d'une partie mobile des mêmes flasques, cette partie mobile étant articulée à l'une de ses extrémités autour d'un axe de rotation fixe à la manière d'une mâchoire autorisant en position d'ouverture le libre passage de la gouttière lors de sa mise à longueur, pour ensuite constituer à celle-ci un support de coupe sans jeu, en position de fermeture.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut-être réalisée et dans lesquels :
La figure 1 est une vue en perspective d'une profileuse munie en sortie d'un outil de coupe et d'un dispositif de soutien de la gouttière selon l'art antérieur.
La figure 2 est une vue en perspective d'une profileuse munie en sortie d'un outil de coupe et d'un dispositif de soutien de la gouttière selon l'invention.
La figure 3 est une vue en perspective arrière de l'outil de coupe selon l'invention.
Les figures 4 et 5 sont des vues schématiques respectivement de face et de dessus de l'outil de coupe montrant le système d'entraînement simultané de la lame et de la mâchoire.
Les figures 6 et 7 sont des vues des moyens de commande de la mâchoire respectivement en position fermée et ouverte.
Les figures 8 et 9 sont des vues des moyens de commande de la lame pendant la coupe et en fin de coupe, ces figures étant respectivement superposables aux figures 6 et 7.

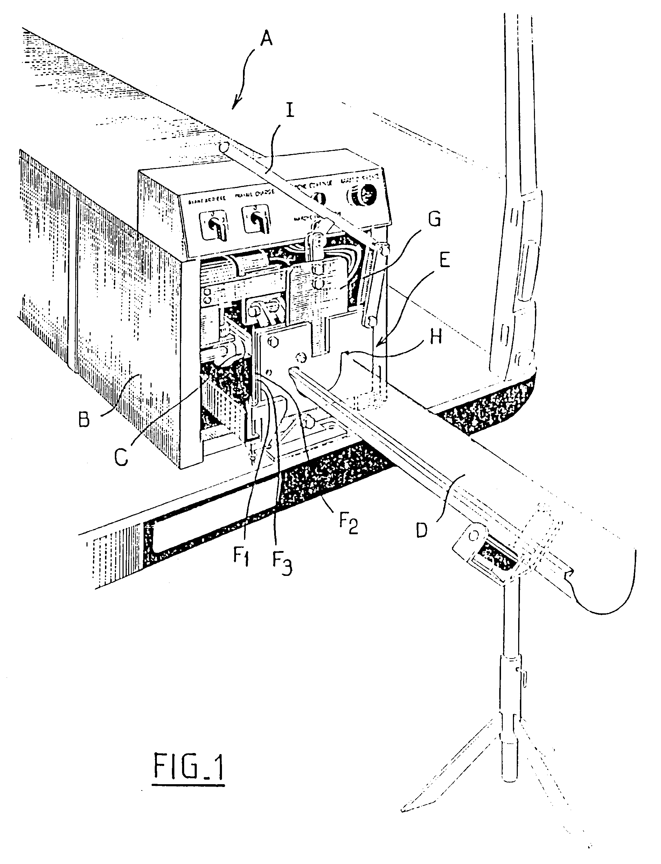

Comme énoncé ci-dessus, la figure 1 illustre l'art antérieur que nous rappelerons ici brièvement de manière à mieux comprendre comment s'en distingue la présente invention.

Comme le montre donc la figure 1, la profileuse A désignée globalement comporte à l'intérieur d'un tunnel B une série de galets C disposés successivement en fonction du profil de gouttière D à obtenir en sortie de profileuse A. Cette dernière est, dans le présent exemple, installée sur un véhicule de manière à constituer avantageusement une station mobile, mais bien entendu elle pourrait être également installée en atelier.

L'outil de coupe E est disposé sur le même châssis que la profileuse A dans sa zone d'évacuation de la gouttière finie.

Il est constitué par deux flasques plans et parallèles F1 et F2, définissant entre eux un espace F3 sensiblement correspondant à l'épaisseur d'une lame coupante G et dans lesquels sont ménagées deux lumières H symétriques et de profil sensiblement identique à celui de la gouttière D. Ainsi, il est constitué à celle-ci un berceau de guidage en vue de sa coupe par l'actionnement de la lame G entre les flasques F1, F2.

Il est connu d'actionner la lame G par un système manuel de bras de levier I, impliquant à la lame un mouvement de haut en bas.

Comme explicité plus haut, un tel dispositif présente l'inconvénient d'attaquer la coupe de la gouttière en deux points nécessitant donc un effort plus important amplifiant encore davantage l'écartement du profil ouvert, qui de plus, présente un certain jeu avec les lumières H dans lequel il est logé.

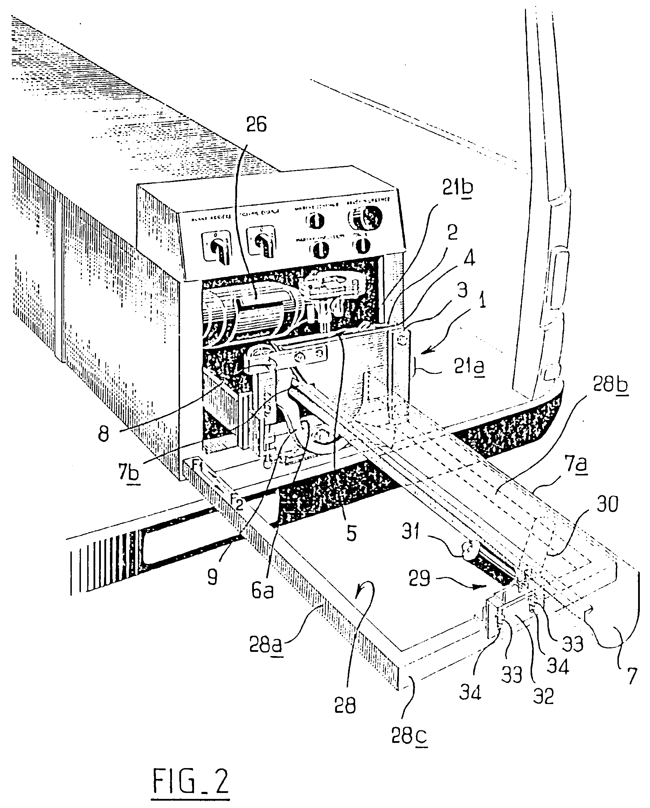

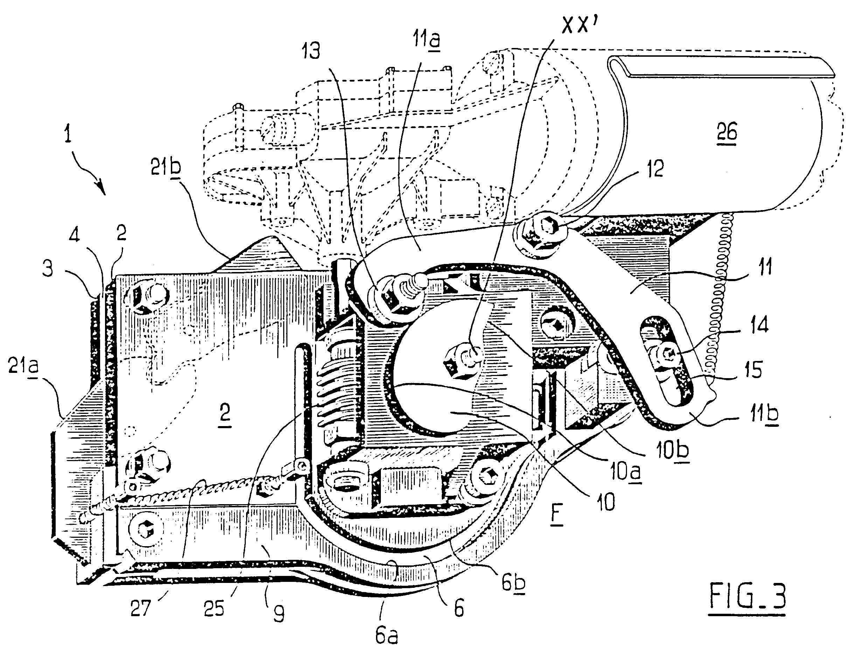

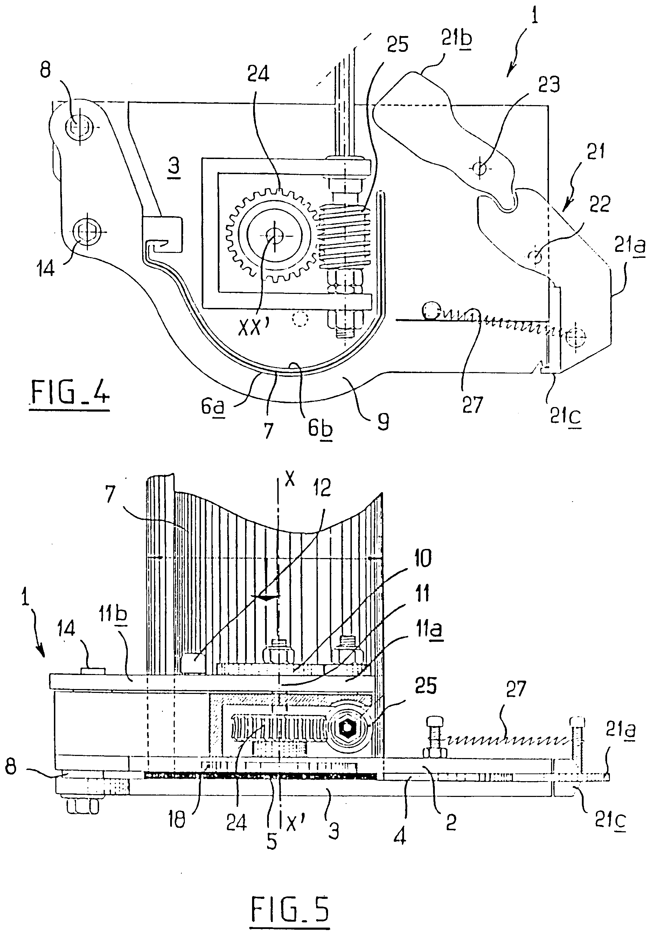

L'outil de coupe 1 selon l'invention désigné globalement sur les figures 2 à 9 comporte également deux flasques plans parallèles 2 et 3, définissant entre eux un espace 4 sensiblement correspondant à l'épaisseur d'une lame coupante 5 et dans lesquels sont ménagées deux lumières symétriques 6 de profils sensiblement identiques à celui de la gouttière 7 pour constituer à celle-ci un berceau de guidage en vue de sa coupe par actionnement par tout moyen de la lame coupante 5 entre lesdits flasques 2 et 3.

L'outil de coupe 1 selon l'invention se distingue de l'outil E de l'art antérieur en ce que le berceau de guidage défini par les lumières 6 est délimité dans sa zone supérieure par le contour convexe 6b d'une partie fixe des flasques 2 et 3 et dans sa zone inférieure par le contour concave 6a d'une partie mobile des mêmes flasques 2 et 3, cette partie mobile étant articulée à l'une de ses extrémité autour d'un axe de rotation fixe 8 à la manière d'une mâchoire 9 autorisant en position d'ouverture O le libre passage de la gouttière 7 lors de sa mise à longueur, pour ensuite constituer à celle-ci un support de coupe sans jeu, en position de fermeture F.

En effet, on comprend aisément qu'une telle mâchoire 9 est conçue pour plaquer et maintenir fermement en contact la gouttière 7 contre le contour convexe 6b de la partie fixe des flasques 2 et 3, car ladite mâchoire 9 est ouverte lors du défilement de la gouttière 7 assurant ainsi non seulement son libre passage dans l'outil 1, mais évitant également d'être rayée par contact avec ce dernier comme par le passé.

Par ailleurs, la mâchoire 9 définissant la partie mobile inférieure des flasques 2 et 3 comporte des moyens d'actionnement en ouverture O ou en fermeture F activés en fonction de la position relative de la lame coupante 5 au cours d'un cycle de coupe prédéterminé.

Ces moyens d'actionnement de la mâchoire 9 en ouverture O ou en fermeture F sont constitués par une came rotative 10 entraînée par tout moyen et dont le pourtour est défini par une zone périphérique circulaire 10a par rapport à son axe de rotation XX' et par une zone méplate 10b plus proche de ce même axe XX' de manière à provoquer le débattement angulaire d'un balancier 11 autour d'un axe fixe 12 disposé entre une de ses extrémités libres 11a en contact permanent avec la came 10 par l'intermédiaire d'un galet 13 et une autre extrémité 11b en liaison avec une partie de la machoire 9 par l'intermédiaire d'un doigt de manoeuvre 14 de celle-ci logé librement dans une lumière 15 réalisée à l'autre extrémité 11b du balancier 11.

Les moyens d'actionnement de la mâchoire 9 sont reliés à des moyens complémentaires d'actionnement de la lame 5 agissant simultanément aux précédents selon un cycle qui sera défini plus loin.

C'est ainsi que la lame coupante 5 est actionnée entre les flasques 2 et 3 selon un mouvement déterminé, d'une part par l'intermédiaire d'un premier pion excentré 16 logé librement dans un logement correspondant 17 de la lame 5 et solidaire d'un élément rotatif circulaire 18 disposé dans l'axe XX' de la came 10 et solidaire de celle-ci en rotation, et d'autre part par un second pion fixe 19 solidaire des flasques 2 et 3 et coopérant avec une lumière de guidage 20 ménagée dans la lame 5 selon un profil déterminé de telle sorte à obtenir, en combinaison avec le mouvement provoqué par l'excentrique 16, 17, 18, un déplacement simultané de ladite lame 5 selon une vitesse rotative nulle par rapport à celle de la gouttière 7 pour l'obtention d'une coupe ponctuelle.

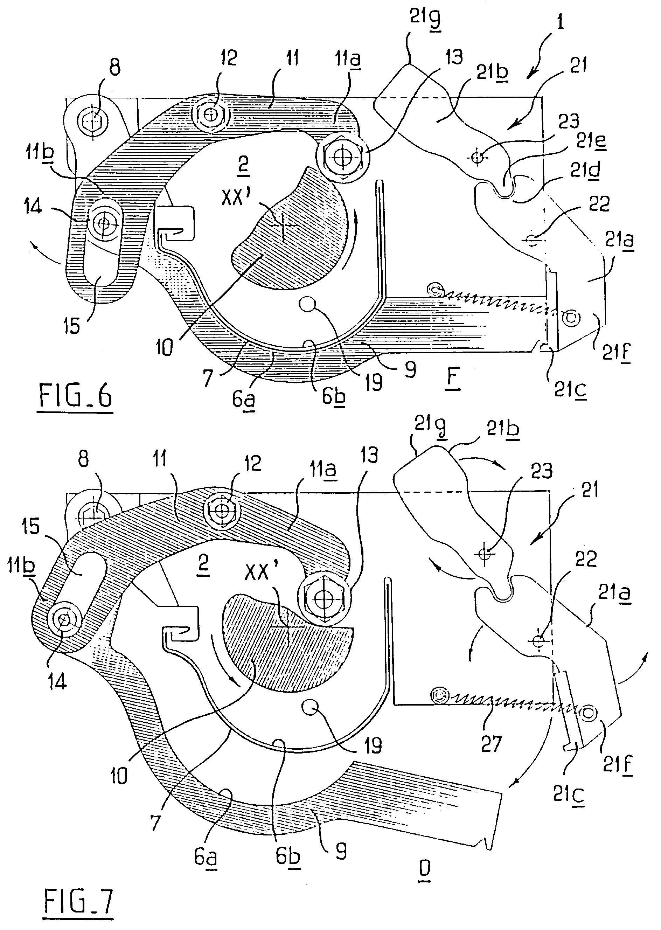

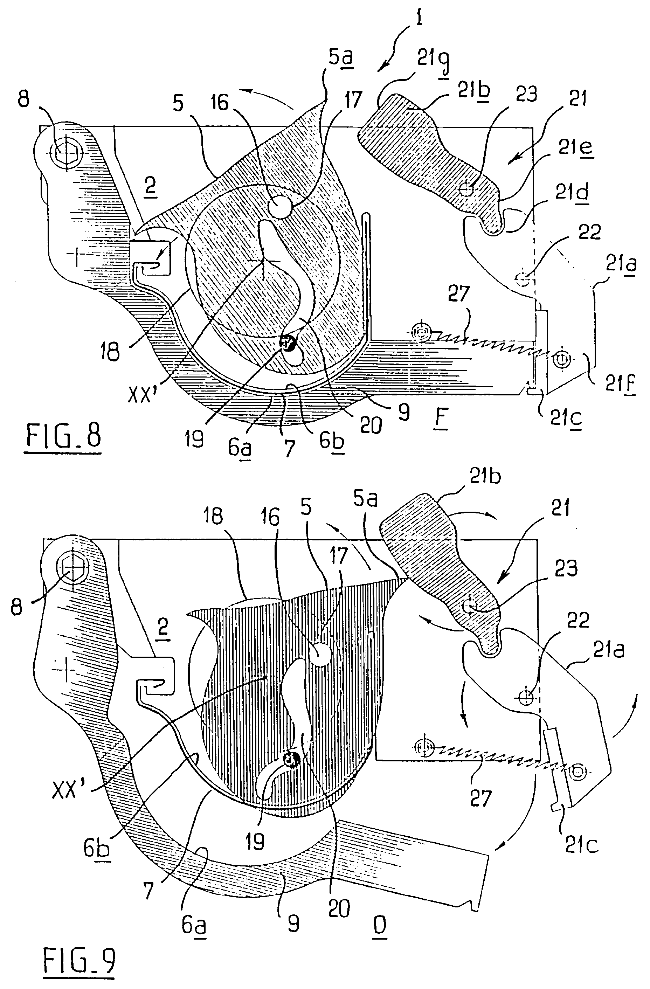

Ceci est particulièrement bien illustré par les figures 8 et 9 qui doivent s'interpréter conjointement avec les figures 6 et 7 respectivement superposables.

En effet, les positions de la came 10 commandant la mâchoire 9 telles que représentées sur les figures 6 et 7 correspondent aux positions de l'excentrique 16, 17, 18 commandant la lame 5 telles que représentées sur les figures 8 et 9.

Les figures 6, 7, 8, 9 ont été en fait dissociées pour une meilleure compréhension du dispositif.

Les figures 8 et 9 illustrent bien également l'un des avantages procuré par l'invention et qui consiste à obtenir un parcours de la lame 5 tel, à attaquer la coupe de la gouttière 7 en un seul point se déplaçant progressivement au fil de la coupe.

Ceci permet d'éviter toute bavure en ne formant qu'un seul copeau continu et également toute craquelure du fait du ferme maintien de la gouttière 7 pendant cette opération. De plus, une telle coupe ponctuelle nécessite un moyen d'entraînement de la lame 5 de faible puissance, car l'effort à fournir est notablement réduit.

Selon une autre caractéristique de l'invention, la mâchoire 9 définissant la partie mobile inférieure des flasques 2 et 3 comporte des moyens de verrouillage 21 actionnés en ouverture O par une proéminence 5a de la lame 5 agissant en ouverture sur ces moyens 21 en fin de cycle de coupe, lesquels moyens sont rappelés automatiquement en fermeture par un ressort de rappel 27 pour permettre le verrouillage automatique de la mâchoire 9 en début de cycle de coupe.

Plus précisément, les moyens de verrouillage 21 de la mâchoire 9 sont constitués par deux bras 21a, 21b articulés sur les axes fixes respectifs 22, 23 des flasques 2 et 3 et rotulant l'un dans l'autre par l'une de leurs extrémités 21d, 21e en vis-à-vis, l'autre extrémité 21g de l'un 21b étant susceptible de coopérer avec la proéminence 5a de la lame 5 et l'autre extrémité 21f de l'autre 21a comportant un becquet 21c d'ancrage de la mâchoire 9.

Selon un choix préférentiel, les moyens d'entraînement de la came 10 d'où de l'excentrique 16, 17, 18 sont constitués par une roue hélicoïdale 24 qui leur est solidaire et qui est disposée dans leur axe commun XX' pour être entraînée en rotation par une vis sans fin 25 elle-même entraînée par un moteur électrique 26.

Bien entendu, l'entraînement précité pourra être obtenu par tout autre moyen, par exemple, en adaptant un outil rotatif tel que perceuse, voire même par action rotative manuelle.

Le fonctionnement de l'outil de coupe qui vient d'être décrit est le suivant en supposant que :
- la vitesse relative de l'outil 1 par rapport au profilé 7 est nulle,
- la mâchoire 9 est ouverte,
- la sécurité (non représentée) de la lame 5 est engagée.

On effectue les opérations suivantes :
- déverrouillage de la sécurité de la lame 5,
- mise en rotation du moteur 26 d'où de la vis sans fin 25, de la roue hélicoïdale 24, de la came 10 et de l'excentrique 16, 17, 18.

Cela provoque pour un tour complet et continu de la came :
- la remontée en fermeture de la mâchoire 9 contre la gouttière 7 en place (fig 6, 8),
- le verrouillage de la mâchoire 9 par le becquet 21c du dispositif de verrouillage 21 (fig 6,8),
- le mouvement de descente de la lame 5 vers la gouttière 7 immobilisée puis de remontée selon un parcours conféré par la forme de la lumière 20 et des caractéristiques de l'excentrique 16, 17, 18 animant la lame 5,
- le déverrouillage de la mâchoire 9 en fin de cycle par action de la proéminence 5a de la lame 5 contre le bras 21b du dispositif de verrouillage 21 libérant ainsi le becquet 21c de retenue de la mâchoire 9 (fig 7, 9).

Comme le montre la figure 2, l'outil de coupe 1 comporte des moyens le rendant adaptable en bout de profileuse de manière à ce que l'opération de coupe de la gouttière 7 à longueur, constitue la dernière phase de la fabrication de celle-ci avant sa mise en oeuvre.

Comme le montre également cette figure, l'outil 1 est monté en bout de profileuse en combinaison avec des moyens de soutènement de la partie libre de la gouttière 7 au moment de sa coupe.

Selon un exemple de réalisation les moyens de soutènement de la gouttière 7 en cours de coupe sont constitués par un châssis 28 solidaire de la profileuse, s'affranchissant donc du sol, disposé dans un plan perpendiculaire au plan de coupe de la lame 5 de l'outil 1, ledit châssis 28 étant réglable en fonction de la longueur de gouttière 7 à couper et comprenant à son extrémité des moyens 29 de réglage en hauteur de la gouttière 7 de manière à permettre d'ajuster parfaitement l'alignement de la partie à couper 7a par rapport à la parie non coupée 7b.

Ces moyens sont constitués par deux rouleaux 30 et 31 disposés en V pour accueillir la gouttière 7 et fixés sur un support 32 fixé sur la traverse 28c du châssis 28, par l'intermédiaire de vis 33 traversant des lumières 34, de nouveau manière à le rendre réglable en hauteur.

Le châssis 28 est réglable dans le plan perpendiculaire à celui de la lame 5 par coulissement de ses montants latéraux 28a, 28b selon les sens F1, F2, dans des logements longitudinaux correspondants de la profileuse.

## Revendications

1. Outil de coupe d'un profilé à section ouverte, notamment une gouttière en tôle, du type comportant deux flasques plans parallèles (2, 3), définissant entre eux un espace 4 sensiblement correspondant à l'épaisseur d'une lame coupante (5) et dans lesquels sont ménagées deux lumières symétriques (6) de profils sensiblement identiques à celui de la gouttière (7) pour constituer à celle-ci un berceau de guidage en vue de sa coupe par actionnement par tout moyen de la lame coupante (5) entre lesdits flasques (2, 3), caractérisé en ce que le berceau de guidage défini par les lumières (6) est délimité dans sa zone supérieure par le contour convexe (6b) d'une partie fixe des flasques (2, 3) et dans sa zone inférieure par le contour concave (6a) d'une partie mobile des mêmes flasques (2, 3), cette partie mobile étant articulée à l'une de ses extrémité autour d'un axe de rotation fixe (8) à la manière d'une mâchoire (9) autorisant en position d'ouverture (O) le libre passage de la gouttière (7) lors de sa mise à longueur, pour ensuite constituer à celle-ci un support de coupe sans jeu, en position de fermeture (F).

2. Outil de coupe selon la revendication 1 caractérisé en ce que la mâchoire (9) définissant la partie mobile inférieure des flasques (2, 3) comporte des moyens d'actionnement en ouverture (O) ou en fermeture (F) activés en fonction de la position relative de la lame coupante (5) au cours d'un cycle de coupe prédéterminé.

3. Outil de coupe selon la revendication 2 caractérisé en ce que les moyens d'actionnement de la mâchoire (9) en ouverture (O) ou en fermeture (F) sont constitués par une came rotative (10) entraînée par tout moyen et dont le pourtour est défini par une zone périphérique circulaire (10a) par rapport à son axe de rotation (XX') et par une zone méplate (10b) plus proche de ce même axe (XX') de manière à provoquer le débattement angulaire d'un balancier (11) autour d'un axe fixe (12) disposé entre une de ses extrémités libres (11a) en contact permanent avec la came (10) par l'intermédiaire d'un galet (13) et une autre extrémité (11b) en liaison avec une partie de la mâchoire (9) par l'intermédiaire d'un doigt de manoeuvre (14) de celle-ci logé librement dans une lumière (15) réalisée à l'autre extrémité (11b) du balancier (11).

4. Outil de coupe selon l'une des revendications précédentes caractérisé en ce que la lame coupante (5) est actionnée entre les flasques (2, 3) selon un mouvement déterminé, d'une part par l'intermédiaire d'un premier pion excentré (16) logé librement dans un logement correspondant (17) de la lame (5) et solidaire d'un élément rotatif circulaire (18) disposé dans l'axe (XX') de la came (10) et solidaire de celle-ci en rotation, et d'autre part par un second pion fixe (19) solidaire des flasques (2, 3) et coopérant avec une lumière de guidage (20) ménagée dans la lame (5) selon un profil déterminé de telle sorte à obtenir, en combinaison avec le mouvement provoqué par l'excentrique (16, 17, 18), un déplacement simultané de ladite lame (5) selon une vitesse rotative nulle par rapport à celle de la gouttière (7) pour l'obtention d'une coupe ponctuelle.

5. Outil de coupe selon l'une des revendications précédentes caractérisé en ce que la mâchoire (9) définissant la partie mobile inférieure des flasques (2, 3) comporte des moyens de verrouillage (21) actionnés en ouverture (O) par une proéminence (5a) de la lame (5) agissant en ouverture sur ces moyens (21) en fin de cycle de coupe, lesquels moyens sont rappelés automatiquement en fermeture par un ressort de rappel (27) pour permettre le verrouillage automatique de la mâchoire (9) en début de cycle de coupe.

6. Outil de coupe selon la revendication 5 caractérisé en ce que les moyens de verrouillage (21) de la mâchoire (9) sont constitués par deux bras (21a, 21b) articulés sur les axes fixes respectifs (22, 23) des flasques (2, 3) et rotulant l'un dans l'autre par l'une de leurs extrémités (21d, 21e) en vis-à-vis, l'autre extrémité (21g) de l'un (21b) étant susceptible de coopérer avec la proéminence (5a) de la lame (5) et l'autre extrémité (21f) de l'autre (21a) comportant un becquet (21c) d'ancrage de la mâchoire (9).

7. Outil de coupe selon les revendications 3 et 4 caractérisé en ce que les moyens d'entraînement de la came (10) d'où de l'excentrique (16, 17, 18) sont constitués par une roue hélicoïdale (24) qui leur est solidaire et qui est disposée dans leur axe commun (XX') pour être entraînée en rotation par une vis sans fin (25) elle-même entraînée par un moteur électrique (26).

8. Outil de coupe selon l'une quelconque des revendications précédentes caractérisé en ce qu'il comporte des moyens le rendant adaptable en bout de profileuse de manière à ce que l'opération de coupe de la gouttière (7) à longueur, constitue la dernière phase de la fabrication de celle-ci avant sa mise en oeuvre.

9. Outil de coupe selon l'une des revendications précédentes caractérisé en ce que celui-ci est monté en bout de profileuse en combinaison avec des moyens de soutènement de la partie libre de la gouttière (7) au moment de sa coupe.

10. Outil de coupe selon la revendication 9 caractérisé en ce que les moyens de soutènement de la gouttière (7) en cours de coupe sont constitués par un châssis (28) solidaire de la profileuse, s'affranchissant donc du sol, disposé dans un plan perpendiculaire au plan de coupe de la lame (5) de l'outil (1), ledit châssis (28) étant réglable en fonction de la longueur de gouttière (7) à couper et comprenant à son extrémité des moyens (29) de réglage en hauteur de la gouttière (7) de manière à permettre d'ajuster parfaitement l'alignement de la partie à couper (7a) par rapport à la parie non coupée (7b).

## Claims

1. Tool for cutting an open section profile, especially a steel gutter, of the type comprising two parallel flat flanges (2, 3) defining between them a space 4 corresponding approximately to the thickness of a cutting blade (5) and in which two symmetrical slots (6) are fitted with profiles approximately identical to that of a gutter (7) so as to form with the latter a guiding cradle with a view to cutting it by any cutting blade device (5) between said flanges (2, 3), characterised in that the guiding cradle defined by the slots (6) is delimited in its upper zone by the convex contour (6b) of a fixed portion of the flanges (2, 3) and in its lower zone by the concave contour (6a) of a mobile portion of the same flanges (2, 3), this mobile portion being joined at one of its extremities around a fixed spin axis (8) in the manner of a jaw (9) authorising in an opening position (0) the free passage of the gutter (7) at the time it is cut to length so as to then constitute with the latter a cutting support without play in a closing position (F).

2. Cutting tool according to claim 1, characterised in that the jaw (9) defining the lower mobile portion of the flanges (2, 3) comprises opening (0) or closing (F) activation means activated according to the relative position of the cutting blade (5) during a predetermined cutting cycle.

3. Cutting tool according to claim 2, characterised in that the means for activating the jaw (9) on opening (0) or closing (F) are constituted by a rotary cam (10) driven by any device and whose circumference is defined by a circular peripheral zone (10a) with respect to its spin axis (XX') and by a flattened zone (10b) closer to this same axis (XX') so as to provoke the angular clearance of a lever (11) around a fixed spindle (12) disposed between one of its free extremities (11a) in permanent contact with the cam (10) by means of a roller (13) and another extremity (11b) in liaison with a portion of the jaw (9) by means of a control finger (14) of the latter housed freely in a slot (15) embodied at the other extremity (11b) of the lever (11).

4. Cutting tool according to one of the preceding claims, characterised in that the cutting blade (5) is activated between the flanges (2, 3) according to a specific movement, firstly by means of a first slug moved out of centre (16) housed freely in a corresponding housing (17) of the blade (5) and integral with a circular rotary element (18) disposed in the axis (XX') of the cam (10) and integral with the latter in rotation, and secondly by a second fixed slug (19) integral with the flanges (2, 3) and cooperating with a guiding slot (20) fitted in the blade (5) according to a specific profile so as to obtain in combination with the movement provoked by the eccentric (16, 17, 18) a simultaneous movement of said cam (5) according to a nil rotary speed with respect to that of the gutter (7) to obtain a localised cut.

5. Cutting tool according to one of the preceding claims, characterised in that the jaw (9) defining the lower mobile portion of the flanges (2, 3) comprises locking means (21) activated on opening (0) by a protuberance (5a) of the blade acting on opening on these means (21) at the end of the cutting cycle, said means being automatically brought back on closing by a return spring (27) to allow the automatic locking of the jaw (9) at the start of the cutting cycle.

6. Cutting tool according to claim 5, characterised in that the locking means (21) of the jaw (9) are constituted by two arms (21a, 21b) joined to the respective fixed axes (22, 23) of the flanges (2, 3) and rotating in each other by one of their extremities (21d, 21c) opposite, the other extremity (21g) of one (21b) being able to cooperate with the protuberance (5a) of the blade (5) and the other extremity (21f) of the other (21a) comprising an overlay (21c) for anchoring the jaw (9).

7. Cutting tool according to claim 3 or 4, characterised in that the means for driving the cam (10) therefore of the eccentric gear (16, 17, 18) are constituted by a helical wheel (24) integral with the latter and disposed in their common axis (XX') so as to be driven in rotation by an endless screw (25) driven by an electric motor (26).

8. Cutting tool according to one of the preceding claims, characterised in that it comprises means rendering it adaptable at the profiler end so that the operation for cutting the gutter (7) to length constitutes the final phase for producing the latter before it is implemented.

9. Cutting tool according to one of the preceding claims, characterised in that it is mounted at the profiler end in combination with the means for supporting the free portion of the gutter (7) at the time it is cut.

10. Cutting tool according to claim 9, characterised in that the means for supporting the gutter (7) during cutting are constituted by a frame (28) integral with the profiler and thus being free from the ground and disposed inside a plane perpendicular to the cutting plane of the blade (5) of the tool (1), said frame (28) being adjustable according to the length of the gutter (7) to be cut and including at its extremity means (29) for adjusting the height of the gutter (7) so as to allow for the alignment of the portion to be cut (7a) to be perfectly adjusted with respect to the non-cut portion (7b).

## Patentansprüche

1. Schneidwerkzeug für ein Profil mit offenem Querschnitt, insbesondere eine Blechrinne vom Typ mit zwei parallelen ebenen Flanschen (2, 3), die zwischen sich einen Raum (4) definieren, der im wesentlichen der Dicke eines Schneidblattes (5) entspricht und in welchem zwei symmetrische Schlitze (6) von Profilen im wesentlichen identisch dem der Rinne (7) untergebracht sind, um für diese einen Führungsschlitten im Hinblick auf ihren Schnitt durch Betätigung durch jedes Schneidblattmittel (5) zwischen diesen Flanschen (2, 3) bilden, dadurch gekennzeichnet, daß der durch die Schlitze (6) definierte Führungsschlitten in seiner oberen Zone durch die konvexe Kontur (6b) eines festen Teils der Flansche (2, 3) und in seiner unteren Zone durch die konkave Kontur (6a) eines beweglichen Teils eben dieser Flansche (2, 3) begrenzt ist, wobei dieser bewegliche Teil an einem seiner Enden um eine feste Drehachse (8) nach Art einer Backe (9) gelenkig ist, die in Öffnungsstellung (O) den freien Durchgang der Rinne (7) bei ihrer Ablängung zuläßt, um anschließend für sie einen spielfreien Schneidträger in Schließstellung (F) zu bilden.

2. Schneidwerkzeug nach Anspruch 1, dadurch gekennzeichnet, daß die den beweglichen unteren Teil der Flansche (2, 3) definierende Backe (9) Betätigungsmittel zum Öffnen (O) oder zum Schließen (F) umfaßt, die als Funktion der Relativposition des Schneidplatzes (5) während eines vorbestimmten Schneidzyklus' aktiviert sind.

3. Schneidwerkzeug nach Anspruch 2, dadurch gekennzeichnet, daß die Betätigungsmittel der Backe (9) in Öffnungs- (O) oder in Schließstellung (F) gebildet sind durch eine Drehnocke (10), die durch irgendein Mittel angetrieben ist und deren Umfang definiert ist durch eine kreisförmige Umfangszone (10a) bezogen auf ihre Drehachse (XX') und durch eine abgeflachte Zone (10b), die näher an dieser Achse (XX') liegt, derart, daß die Winkelauslenkung eines Schwinghebels (11) um eine feste Achse (12) hervorgerufen wird, die zwischen einem ihrer freien Enden (11a) in dauerndem Kontakt mit der Nocke (10) vermittels einer Rolle (13) angeordnet ist und einem anderen Ende (11b) in Verbindung mit einem Teil der Backe (9) vermittels eines Betätigungsfingers (14) hiervon frei in einem Schlitz (15) gelagert ist, der am anderen Ende (11b) des Schwinghebels (11) ausgebildet ist.

4. Schneidwerkzeug nach einem der vorhergehenden Ansprüche, dadurch gekennzeichnet, daß das Schneidblatt (5) zwischen den Flanschen (2, 3) entsprechend einer bestimmten Bewegung einerseits vermittels eines ersten Exzenterpions (16) betätigt wird, der frei in einem entsprechenden Lager (17) des Blattes (5) gelagert und fest bezüglich eines kreisförmigen Drehelements (18) ist, das in der Achse (XX') der Nocke (10) angeordnet und drehfest mit dieser verbunden ist und andererseits vermittels eines zweiten an den Flanschen (2, 3) fest angebrachten Pions (19), der mit einem Führungsschlitz (20) zusammenwirkt, der in dem Blatt (5) entsprechend einem bestimmten Profil angeordnet ist, derart, daß in Kombination mit der durch den Exzenter hervorgerufenen Bewegung (16, 17, 18) eine gleichzeitige Verschiebung dieses Schneidblatts (5) entsprechend einer Drehgeschwindigkeit Null bezogen auf die Rinne (7) zum Erhalt eines punktuellen Schnitts erhalten wird.

5. Schneidwerkzeug nach einem der vorhergehenden Ansprüche, dadurch gekennzeichnet, daß die den unteren beweglichen Teil der Flansche (2, 3) definierende Backe (9) Verriegelungsmittel (21) aufweist, die in Öffnungsstellung (O) durch einen Vorsprung (5a) des Blattes (5) betätigt werden, und in Öffnungsstellung auf diese Mittel (21) bei Ende des Schneidzyklus' wirken, wobei diese Mittel automatisch in Schließstellung durch eine Rückstellfeder (27) zurückgestellt werden, um das automatische Verriegeln der Backe (9) bei Beginn des Schneidzyklus zu ermöglichen.

6. Schneidwerkzeug nach Anspruch 5, dadurch gekennzeichnet, daß die Verriegelungsmittel (21) der Backe (9) gebildet werden durch zwei Arme (21a, 21b), die auf den jeweiligen festen Achsen (22, 23) der Flansche (2, 3) gelenkig sind und ineinander kugelgelenkartig über eines ihrer sich gegenüberliegenden Enden (21d, 21c) beweglich sind und das andere Ende (21g) des einen Arms (21b) in der Lage ist, mit dem Vorsprung (5a) des Schneidblocks (5) zusammenzuwirken und das andere Ende (21f) des anderen (21a) einen spoilerartigen Vorsprung (21c) zur Verankerung der Backe (9) umfaßt.

7. Schneidwerkzeug nach Anspruch 3 und 4, dadurch gekennzeichnet, daß die Mitnahmemittel für die Nocke (10) oder des Exzenters (16, 17, 18) gebildet werden durch ein Spiralrad (24), das fest hiermit verbunden ist und welches in deren gemeinsamer Achse (XX') angeordnet ist, um in Drehung durch eine endlose Schnecke (25) mitgenommen zu werden, die selbst durch einen Elektromotor (26) angetrieben ist.

8. Schneidwerkzeug nach einem der vorhergehenden Ansprüche, dadurch gekennzeichnet, daß es Mittel umfaßt, welche es am Ende der profilgebenden Maschine in die Lage versetzen, damit der Schneidvorgang der Rinne (7) auf Länge die letzte Phase von deren Herstellung vor deren Inbetriebnahme bildet.

9. Schneidwerkzeug nach einem der vorhergehenden Ansprüche, dadurch gekennzeichnet, daß dieses am Ende der profilgebenden Maschine in Kombination mit Haltemitteln für den freien Teil der Rinne im Augenblick ihres Schneidens verlagert ist.

10. Schneidwerkzeug nach Anspruch 9, dadurch gekennzeichnet, daß die Abstützmittel für die Rinne 7 während des Schneidens gebildet werden durch ein Chassis (28), das fest mit der profilgebenden Maschine verbunden ist und somit frei vom Boden ist und in einer Ebene senkrecht zur Schneidebene des Blattes (5) des Werkzeugs (1) angeordnet ist, dieses Chassis (28) als Funktion der Länge der zu schneidenden Rinne (7) einstellbar ist und an seinem Ende Mittel (29) zur Höheneinstellung der Rinne (7) derart umfaßt, daß die Ausrichtung des zu schneidenden Teils (7a) bezüglich des nichtgeschnittenen Teils (7b) vollständig möglich wird.
